Europäisches Patentamt

European Patent Office

Office européen des brevets

(19)

(11) **EP 1 206 151 A1**

(12) **EUROPÄISCHE PATENTANMELDUNG**

(43) Veröffentlichungstag:
  **15.05.2002 Patentblatt 2002/20**

(51) Int Cl.7: **H04Q 7/38**

(21) Anmeldenummer: **01000618.7**

(22) Anmeldetag: **12.11.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **14.11.2000 DE 10056361**

(71) Anmelder:
  • **Philips Corporate Intellectual Property GmbH**
    **52064 Aachen (DE)**
  • **Koninklijke Philips Electronics N.V.**
    **5621 BA Eindhoven (NL)**

(72) Erfinder:
  • **Herrmann, Christoph**
    **52064, Aachen (DE)**
  • **Nickel, Patrick**
    **52064, Aachen (DE)**

(74) Vertreter: **Volmer, Georg, Dipl.-Ing. et al**
  **Philips Corporate Intellectual Property GmbH,**
  **Habsburgerallee 11**
  **52064 Aachen (DE)**

(54) **Drahtloses Netzwerk zur Übermittlung von Parametern für eine verschlüsselte Datenübertragung**

(57) Die Erfindung bezieht sich auf ein drahtloses Netzwerk mit einem Funkzugangsnetz und mehreren Terminals, die jeweils zur Verschlüsselung bestimmter zu übertragener Daten und zur gleichartigen Bildung eines Schlüssels in Abhängigkeit von einer ersten und zweiten Rahmennummer bei einer aufzubauenden oder umzukonfigurierenden Verbindung zwischen dem Funkzugangsnetz und einem Terminal vorgesehen sind. Die erste Rahmennummer hängt von der periodisch sich verändernden Nummer des für die Datenübertragung verwendeten Funkrahmens und der Wert der zweiten Rahmennummer von der ersten Rahmennummer ab. Anhand des Wertes der ersten Rahmennummer ist das Terminal und/oder das Funkzugangsnetz zur Feststellung vorgesehen ist, ob im Funkzugangsnetz eine zeitliche Verzögerung der Bildung der zweiten Rahmennummer erfolgen muss.

FIG. 3

**EP 1 206 151 A1**

**Beschreibung**

Die Erfindung bezieht sich auf ein drahtloses Netzwerk mit einem Funkzugangsnetz und mehreren Terminals, die jeweils zur Verschlüsselung bestimmter zu übertragender Daten und zur gleichartigen Bildung eines Schlüssels in Abhängigkeit von einer ersten und zweiten Rahmennummer bei einer aufzubauenden oder umzukonfigurierenden Verbindung zwischen dem Funkzugangsnetzwerk und einem Terminal vorgesehen sind.

Ein solches drahtloses Netzwerk ist aus 3$^{rd}$ Generation Partnership Project (3GPP); Technical Specification Group (TSG) RAN; Working Group 2 (WG2); Radio Interface Protocol Architecture; TS 25.331 V.3.4.1, Kapitel 8.5.17 bekannt. Zur Verschlüsselung von Daten, die zwischen Funkzugangsnetzwerk und einem Terminal übertragen werden, wird ein Schlüssel benötigt, der im Transparent Mode aus verschiedenen Rahmennummern gebildet wird. Eine Rahmennummer, die als Verbindungs-Rahmennummer bezeichnet wird, wird nach einer Formel berechnet und benutzt dabei eine Funk- oder System-Rahmennummer. Diese Verbindungs-Rahmennummer wird zur Inkrementierung der Überrahmennummer verwendet. Hierbei kann es passieren, dass das Funkzugangsnetz und das zugeordnete Terminal ihre Uberrahmennummern unterschiedlich ändern, was zu differierenden Entschlüsselungsmasken führt.

Der Erfindung liegt die Aufgabe zugrunde, ein drahtloses Netzwerk zu schaffen, bei dem sowohl im Funkzugangsnetz als auch im Terminal eine gleichartige Änderung der Überrahmennummer ermöglicht wird.

Die Aufgabe wird durch ein drahtloses Netzwerk mit folgenden Merkmalen gelöst: Das drahtloses Netzwerk enthält ein Funkzugangsnetz und mehrere Terminals, die jeweils zur Verschlüsselung bestimmter zu übertragener Daten und zur gleichartigen Bildung eines Schlüssels in Abhängigkeit von einer ersten und zweiten Rahmennummer bei einer aufzubauenden oder umzukonfigurierenden Verbindung zwischen dem Funkzugangsnetz und einem Terminal vorgesehen sind,
wobei die erste Rahmennummer von der periodisch sich verändernden Nummer des für die Datenübertragung verwendeten Funkrahmens und der Wert der zweiten Rahmennummer von der ersten Rahmennummer abhängt und wobei anhand des Wertes der ersten Rahmennummer das Terminal und/oder das Funkzugangsnetz zur Feststellung vorgesehen ist, ob im Funkzugangsnetz eine zeitliche Verzögerung der Bildung der zweiten Rahmennummer erfolgen muss.

Ausführungsbeispiele der Erfindung werden nachstehend anhand der Fig. näher erläutert. Es zeigen:

Fig. 1        ein drahtloses Netzwerk mit einem Funkzugangsnetz und mehreren Terminals,

Fig. 2        ein Schichtenmodell zur Erläuterung verschiedener Funktionen eines Terminals oder eines Funkzugangsnetzes,

Fig. 3        ein Blockschaltbild zur Erläuterung des Verschlüsselungsmechanismus in einem Terminal oder einem Funkzugangsnetz und

Fig 4 und 5    Diagramme zur Erläuterung von Änderungen einer Überrahmennummer.

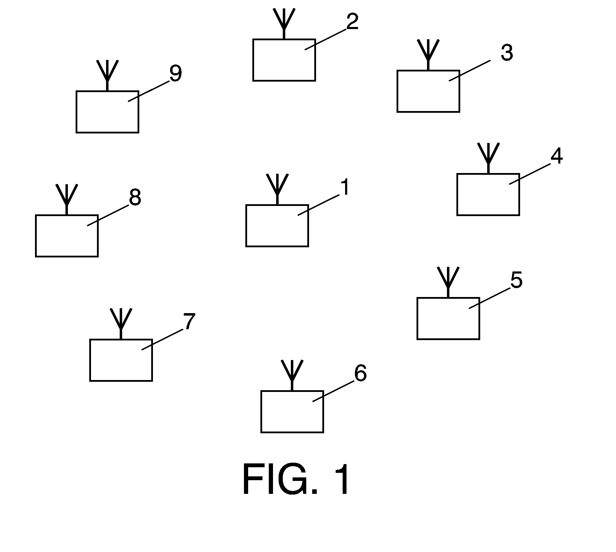

In Fig. 1 ist ein drahtloses Netzwerk, z.B. Funknetzwerk, mit einem aus einer Basisstation und Funknetzwerk-Steuerung (Radio Network Controller = RNC) bestehenden Funkzugangsnetz 1 und mehreren Terminals 2 bis 9 dargestellt. Das Funkzugangsnetz 1 besteht im allgemeinen aus mehreren Basisstationen und mehreren Funknetzwerk-Steuerungen. Die Funknetzwerk-Steuerung (RNC) ist für die Steuerung aller am Funkverkehr beteiligten Komponenten (z.B.: Terminals 2 bis 9, Basisstation) verantwortlich. Die Basisstation überträgt die von der Funknetzwerk-Steuerung erhaltenen Steuer- und Nutzdaten zu den Terminals 2 bis 9.

In der Regel sind die Terminals 2 bis 9 Mobilstationen. Eine Basisstation innerhalb des Funkzugangsnetzes 1 ist in der Regal fest installiert, kann gegebenenfalls aber auch beweglich bzw. mobil sein.

Das in der Fig. 1 dargestellte Netzwerk besteht aus einer Funkzelle. Ein solches Netzwerk kann aber auch aus mehreren Funkzellen bestehen, bei dem die Terminals auch zwischen den Funkzellen wechseln können.

In dem drahtlosen Netzwerk werden beispielsweise Funksignale nach dem FDMA-, TDMA- oder CDMA-Verfahren (FDMA = frequency division multiplex access, TDMA = time division multiplex access, CDMA = code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_C$ bezeichnet. $1/T_C$ ist die Chiprate. Die Multiplikation bzw. Modulation des Datensignals mit dem pseudo-zufälligen Rechtecksignal hat eine Spreizung des Spektrums um den Spreizungsfaktor $N_C = T/T_C$ zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung des Funkzugangsnetzes 1 werden über von der Funknetzwerk-Steuerung vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Basisstation zu den Terminals 2 bis 9 wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet.

Beispielsweise kann ein Downlink-Steuerkanal vorgesehen sein, der benutzt wird, um von einer Funknetzwerk-Steuerung des Funkzugangsnetzes 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zu einer Funknetzwerk-Steuerung der Funkzugangsnetzes 1 kann beispielsweise ein von einer Funknetzwerk-Steuerung des Funkzugangsnetzes 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau z.B. zwischen einem Terminal 2 bis 9 und einer Funknetzwerk-Steuerung des Funkzugangsnetzes 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Zur Einbindung eines Terminals 2 bis 9 zu einer Funknetzwerk-Steuerung des Funkzugangsnetzes 1 ist ein kollisionsbehafteter Kanal mit wahlfreiem Zugriff zuständig, der im folgenden als RACH-Kanal (RACH = Random Access Channel) bezeichnet wird. Über einen solchen RACH-Kanal können auch Datenpakete übertragen werden. Ein weiterer kollisionsbehafteter Kanal mit wahlfreiem Zugriff, der für die Übertragung von Daten von einem Terminal 2 bis 9 zu einer Funknetzwerk-Steuerung des Funkzugangsnetzes 1 vorgesehen ist, wird als FACH-Kanal (FACH = Forward Access Channel) bezeichnet.

Damit Nutzdaten zwischen dem Funkzugangsnetz 1 und einem Terminal ausgetauscht werden können, ist es erforderlich, dass ein Terminal 2 bis 9 mit einer Basisstation des Funkzugangsnetzes 1 synchronisiert wird. Beispielsweise ist aus dem GSM-System (GSM = Global System for Mobile communication) bekannt, in welchem eine Kombination aus FDMA- und TDMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden. Aus Vereinfachungsgründen wird im folgenden von einem Rahmen ausgegangen, der als Funkrahmen bezeichnet wird.

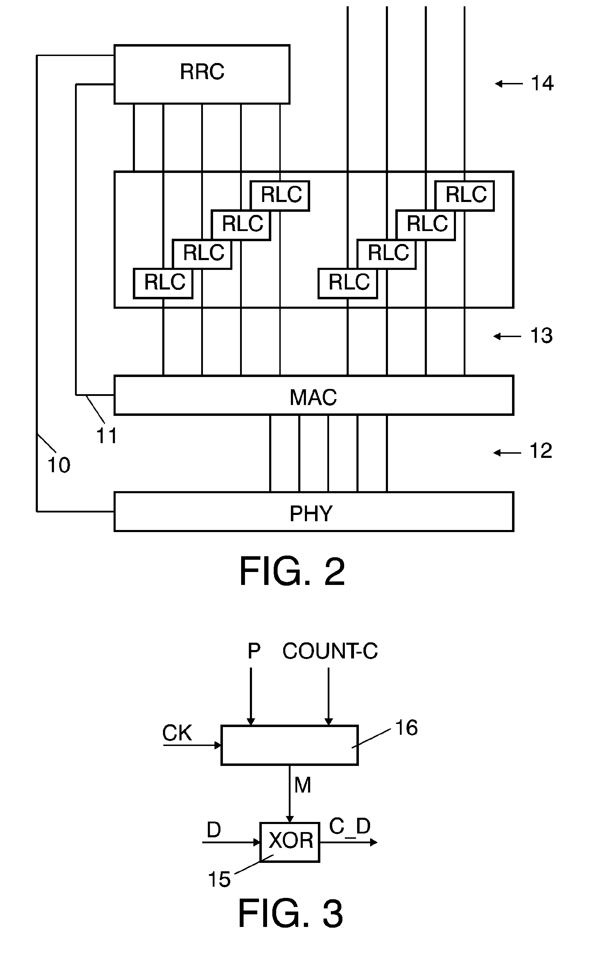

Der Steuer- und Nutzdatenaustausch über die Funkschnittstelle zwischen dem Funkzugangsnetz 1 und den Terminals 2 bis 9 kann mit dem in Fig. 2 dargestellten, beispielhaften Schichtmodell oder Protokollarchitektur (vgl. z.B. 3rd Generation Partnership Project (3GPP); Technical Specification Group (TSG) RAN; Working Group 2 (WG2); Radio Interface Protocol Architecture; TS 25.301 V3.6.0 (2000-09)) erläutert werden. Das Schichtenmodell besteht aus drei Protokollschichten: der physikalischen Schicht PHY, der Datenverbindungsschicht mit den Unterschichten MAC und RLC (in Fig 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig. Die Schicht RRC ist für die Signalisierung zwischen den Terminals 2 bis 9 und einer Funknetzwerk-Steuerung des Funkzugangsnetzes 1 verantwortlich. Die Unterschicht RLC dient zur Steuerung einer Funkverbindung zwischen einem Terminal 2 bis 9 und einer Funknetzwerk-Steuerung des Funkzugangsnetzes 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportverbindungen 12 an. Die MAC-Schicht stellt der RLC-Schicht logische Verbindungen 13 zur Verfügung. Die RLC-Schicht ist über Zugangspunkte 14 von Applikationen erreichbar.

Bei einem solchen drahtlosen Netzwerk werden die Daten aus Sicherheits- und Vertraulichkeitsgründen verschlüsselt über die Funkschnittstelle übertragen, um eine Abhören der Daten zu verhindern. Die Verschlüsselung wird in der Datenverbindungsschicht (z. B. in der RLC-oder MAC-Schicht) durchgeführt. Wie Fig. 3 zeigt, werden die Daten D über eine Exklusiv-Oder-Funktion (XOR) mit einer Verschlüsselungsmaske M verknüpft, so dass sich ein verschlüsselter Datenstrom C_D ergibt. Die Verschlüsselungsmaske M wird in einer Verschlüsselungs-Funktion 16 gebildet, die nach einem Verschlüsselungs-Algorithmus arbeitet und als Eingangswerte den Schlüssel CK, die Zahl COUNT-C und andere hier nicht näher dargestellte Parameter P erhält. Die Zahl COUNT-C ist 32 Bit lang. Sie wird für unterschiedliche RLC-Verbindungstypen (RLC-Acknowledged-Mode-Übertragung, d.h. mit Paketkopf und Folgenummer und darauf basierter Übertragungswiederholung, RLC-Unacknowledged-Mode-Übertragung, d.h. mit Paketkopf und Folgenummer aber ohne Übertragungswiederholungen, RLC-Transparent-Mode-Übertragung, d.h. ohne Paketkopf und ohne Folgenummer) unterschiedlich gebildet. Für alle Verbindungen im RLC-Transparent-Mode werden die unteren 7 Bit von COUNT-C durch eine Verbindungs-Rahmennummer (Connection Frame Number = CFN) bestimmt, die ebenfalls aus 7 Bit besteht und die aus der über den Broadcast- oder Verteilkanal von einer Basisstation ausgestrahlten System-Rahmennummer (System Frame Number = SFN) bestimmt wird. Die System-Rahmennummer SFN wird nach jedem Ramenwechsel modulo 4096 inkrementiert. COUNT-C unterscheidet sich hierbei für Verbindungen im Durchschaltevermittlungsdienst und Paketvermittlungsdienst. Alle Verbindungen im Durchschaltevermittlungsdienst nutzen denselben Wert COUNT-C. Alle Verbindungen im Paketvermittlungsdienst nutzen ebenfalls denselben Wert COUNT-C, der sich aber von dem Wert COUNT-C im Durchschaltevermittlungsdienst unterscheidet. Für jede einzelne Verbindung im RLC-Acknowledged-Mode werden die unteren 12 Bit von COUNT-C durch die 12-Bit-Folgenummer des Paketkopfes bestimmt, für jede einzelne Verbindung im RLC-Unacknowledged-Mode werden die unteren 7 Bit von COUNT-C durch die 7-Bit-Folgenummer des Paketkopfes bestimmt, so dass sich die Werte von COUNT-C für unterschiedliche Verbindungen, bei der keine RLC-Transparent-Mode-Übertragung gewählt ist, in der Regel unterscheiden.

Die verbleibenden Bits von COUNT-C, die als Überrahmennummer (Hyper Frame Number = HFN) bezeichnet werden, werden nach folgender Vorschrift aus einer 20-bit-Zahl START berechnet:

Das Terminal teilt der Funknetzwerk-Steuerung bei Aufbau der RRC-Verbindung jeweils für Durchschaltevermittlungsdienste (CS = Circuit-switched) und Paketvermittlungsdienste (PS = Packet-switched) einen gespeicherten 20-Bit-Wert START-CS und einen 20-Bit-Wert START-PS mit. Diese Werte initialisieren die oberen 20 Bit der Überrahmennummer HFN für Verbindungen im Durchschaltevermittlungsdienst und im Paketvermittlungsdienst. Entsprechend werden bei Abbau der RRC-Verbindung aus den vorhandenen Überrahmennummern HFN durch Maximumbildung über alle vorhandenen Werte COUNT-C für die jeweiligen Verbindungen im Durchschaltevermittlungsdienst und im Paketvermittlungsdienst zu speichernde Werte START-CS und START-PS gebildet.

Die Überrahmennummer HFN wird immer dann inkrementiert, wenn im Falle von RLC-Transparent-Mode-Übertragung die Verbindungs-Rahmennummer CFN einen Überschlag erfährt bzw. von RLC-Acknowledged-Mode-Übertragung oder RLC-Unacknowledged-Mode-Übertragung die Folgenummer einen Überschlag erfährt. Da dies in der Regal sowohl auf Seiten der Terminals als auch in der Funknetzwerk-Steuerung geschieht, werden zum Verschlüsseln und zum Entschlüsseln immer dieselben Werte COUNT-C für die einzelnen Verbindungen verwendet, so dass korrekt entschlüsselt werden kann.

Allerdings können bei der RLC-Transparent-Mode-Übertragung Schwierigkeiten hinsichtlich der Gleichheit der Überrahmennnummer HFN in dem Terminal und in der Funknetzwerk-Steuerung auftreten, wenn die Terminals nach der Nutzung des RACH-Kanals für Uplink-Daten und des FACH-Kanals für Downlink-Daten einen dedizierten Kanal zugeteilt bekommen (Wechsel von einem Zustand (CELL_FACH), in dem der Ort des Terminal auf Zellebene bekannt ist und das Terminal über den RACH-Kanal Uplink-Daten sendet und über den FACH-Kanal Downlink-Daten empfängt, in einen Zustand (CELL_DCH), in dem das Terminal Uplink- und Downlink-Daten über einen dedizierten Kanal empfängt), oder im Falle des nicht-synchronisierten Hard-Handover in eine neue Zelle wechselt. Von einem nicht-synchronisierten Hard-Handover wird gesprochen, wenn das Terminal die System-Rahmennummer SFN in der neuen Zelle vor dem Abschalten der Verbindung zur alten Zelle noch nicht kennt (nichtsynchronisiert) und die Verbindung zur neuen Zelle erst nach Abschalten der Verbindung zur alten Zelle eingeschaltet wird (Hard-Handover). In dieser Situation ist dann auf der Seite der Funknetzwerk-Steuerung unter Umständen nicht klar, ob das Terminal die Überrahmennummer HFN hochgezählt hat, so dass die Überrahmennummer HFN in dem Terminal und in der Funknetzwerk-Steuerung differieren können.

Die Funknetzwerk-Steuerung zeigt einen Wechsel vom Zustand CELL_FACH in den Zustand CELL_DCH unter anderem durch das Senden einer Nachricht PCR (PHYSICAL CHANNEL RECONFIGURATION) an (vgl. 3GPP TS 25.331 v3.4.1), die einem Terminal mitteilt, welche Codes zum Empfang und zum Senden auf dem dedizierten Kanal verwendet werden sollen. Das Terminal berechnet nach dem Wechsel vom Zustand CELL_FACH in den Zustand CELL_DCH die im Zustand CELL_DCH gültige Verbindungs-Rahmennummer CFN mittels der Formel

$$CFN = ((SFN * 38400 - DOFF * 512) \ div \ 38400 ) \ mod \ 256,$$

wobei SFN die System-Rahmennummer in der Zelle angibt, in der das Terminal den dedizierten Kanal betreibt, und DOFF eine für ein Terminal spezifische Zahl darstellt, mit der die Funknetzwerk-Steuerung die Übertragungszeitpunkte verschiedener Terminals über die Zeit verteilen kann (vgl. 3GPP TS 25.331 v3.4.1, Kapitel 8.5.17). DOFF wird dem Terminal in der Nachricht PCR mitgeteilt.

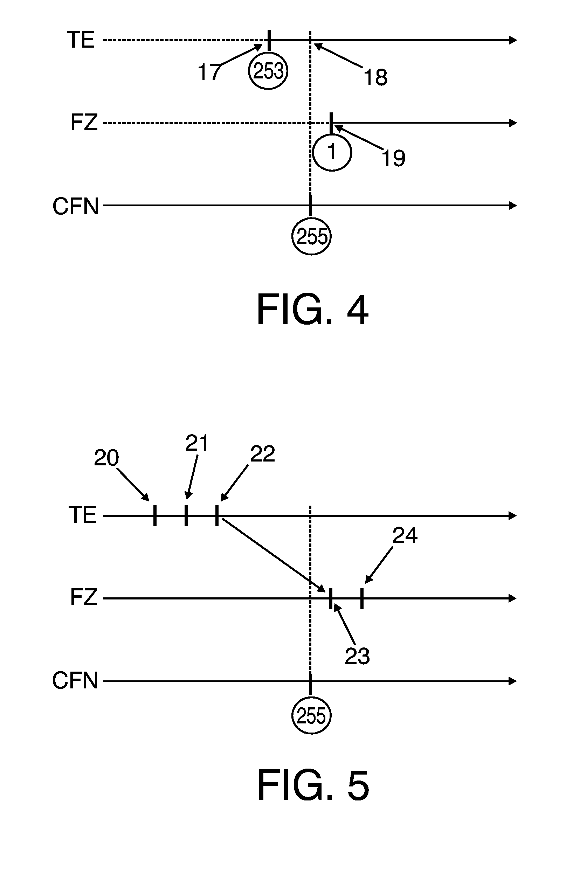

Beim Wechsel vom Zustand CELL_FACH in den Zustand CELL_DCH kann es sein, dass das Terminal nach Erreichen der Synchronisation auf das physikalische Downlink-Signal der Basisstation bedingt durch die dann aktuelle System-Rahmennummer SFN, die nach obiger Formel berechnet wird, möglicherweise eine Verbindungs-Rahmennummer CFN ermittelt, die nahe bei 255 liegt, beispielsweise 253. In Fig. 4 ist dies dargestellt, wobei TE die Bezeichnung für ein Terminal, FZ die Bezeichnung für das Funkzugangsnetz und CFN die Bezeichnung für die Verbindungs-Rahmennummer ist. Das Bezugszeichen 17 gibt die im Terminal berechnete Verbindungs-Rahmennummer CFN an, die gleich 253 ist, und das Bezugszeichen 18 die maximale Verbindungs-Rahmennummer CFN an, die gleich 255 ist.

Nach Erreichen der Synchronisation auf das physikalische Downlink-Signal der Basisstation sendet das Terminal sein Uplink-Signal. Synchronisiert sich die Funknetzwerk-Steuerung auf dieses physikalische Uplink-Signal des Terminals, z.B. erst 4 Funkrahmen nach der Synchronisation auf das physikalische Downlink-Signal in dem Terminal, so ermittelt die Funknetzwerk-Steuerung erst zu diesem Zeitpunkt aus der auf beiden Seiten bekannten System-Rahmennummer SFN die Verbindungs-Rahmennummer CFN, welche dann nach der obigen Formel berechnet, den Wert 1 ergibt (vgl. Fig 4 mit Bezugszeichen 19). Auf Seiten des Terminals hat es somit einen Überschlag der Verbindungs-Rahmennummer CFN gegeben, die eine Inkrementierung der Überrahmennummer HFN in dem Terminal bewirkt. In der Funknetzwerk-Steuerung hat die Verbindungs-Rahmennummer CFN den Wert 1 nachdem die Funknetzwerk-Steuerung sich auf das physikalische Uplink-Signal synchronisiert hat (d.h. die Verbindungs-Rahmennummer CFN hat keinen Überschlag erfahren), so dass die Überrahmennummer HFN nicht inkrementiert wird. Als Folge daraus sind nun die Überrahmennummern HFN und somit die Werte COUNT-C im Terminal und der Funknetzwerk-Steuerung verschieden, wodurch eine Entschlüsselung nicht mehr korrekt erfolgen kann.

Abhilfe schaffen kann hier eine Mitteilung der Funknetzwerk-Steuerung über einen Aktivierungszeitpunkt (bestehend aus einer Verbindungs-Rahmennummer CFN) für das Inkrementieren der Überrahmennummer HFN, zu dem die Überrahmennummer HFN tatsächlich hochgezählt werden darf. Da die Funknetzwerk-Steuerung selbst im Vorhinein die neue Verbindungs-Rahmennummer CFN ermitteln kann, die das Terminal nach Erreichen der Synchronisation auf das Downlink-Signal der Basisstation verwendet, kann die Funknetzwerk-Steuerung abschätzen, dass ein Überschlag der Verbindungs-Rahmennummer CFN zu erwarten ist, und den Aktivierungszeitpunkt z.B. auf die Verbindungs-Rahmennummer CFN = 20 setzen. Dabei muss berücksichtigt werden, wie lange es maximal dauert, bis die Funknetzwerk-Steuerung sich auf das physikalische Uplink-Signal synchronisiert hat, nachdem das Terminal sich zuvor auf das physikalische Downlink-Signal synchronisiert hat. Erst mit der Synchronisierung auf das physikalische Uplink-Signal kann die Funknetzwerk-Steuerung sicher sein, dass auch das Terminal sich auf das physikalische Downlink-Signal synchronisiert hat, und somit auf die neue Verbindungs-Rahmennummer CFN umgeschaltet hat. Der Aktivierungszeitpunkt für das Inkrementieren der Überrahmennummer HFN sollte in der Nachricht PCR oder einer anderen Nachricht, die den Wechsel vom Zustand CELL_FACH zum Zustand CELL_DCH einleiten kann, mit eingefügt sein.

Anstelle der Übertragung des Aktivierungszeitpunkts für das Inkrementieren der Überrahmennummer HFN kann die Funknetzwerk-Steuerung auch das physikalische Downlink-Signal geeignet verzögern.

Beim Zellwechsel eines Terminals bei einem unsynchronisierten Hard-Handover stellt sich dasselbe Problem, wobei hier allerdings die Funknetzwerk-Steuerung beim Senden der Nachricht PCR (oder einer anderen Nachricht, die den Hard-Handover einleiten kann) die System-Rahmennummer SFN in der neuen Zelle noch nicht kennen kann (da sie auch nicht von dem Terminal ermittelt wird). Hierbei ist dann die Lösung des Synchronisationsproblems über einen Aktivierungszeitpunkt nicht möglich, weil dafür wesentlich ist, dass die Funknetzwerk-Steuerung weiß, wann in der neuen Zelle bei Verwendung der gültigen Verbindungs-Rahmennummer CFN ein Überschlag auftreten wird. Da die System-Rahmennummer SFN in der neuen Zelle der Funknetzwerk-Steuerung der alten Zelle nicht bekannt ist, kann hier bei bekannter Berechnungsformel für die Verbindungs-Rahmennummer CFN in der neuen Zelle kein sinnvoller Aktivierungszeitpunkt von der Funknetzwerk-Steuerung der alten Zelle angegeben werden, da die System-Rahmennummer SFN der neuen Zelle mit einfließt.

Das Terminal berechnet beim unsynchronisierten Hard-Handover nach dem Wechsel in die neue Zelle die dort gültige Verbindungs-Rahmennummer CFN ebenfalls mittels der Formel

$$CFN = ((SFN * 38400 - DOFF * 512) \text{ div } 38400) \text{ mod } 256,$$

wobei SFN die System-Rahmennummer in der neuen Zelle angibt, in der das Terminal den dedizierten Kanal weiter betreibt, und DOFF wiederum eine für ein Terminal spezifische Zahl darstellt, mit der die Funknetzwerk-Steuerung die Übertragungszeitpunkte verschiedener Terminals über die Zeit verteilen kann (vgl. 3GPP TS 25.331 v3.4.1, Kapitel 8.5.17). DOFF wird dem Terminal schon in der Nachricht PCR mitgeteilt.

Abhilfe gegen das Entstehen verschiedener Überrahmennummern HFN im Terminal und der Funknetzwerk-Steuerung bieten die beiden folgende Maßnahmen (Deaktivierungs-Prozedur):

Bei der ersten Maßnahme wird eine minimale Verbindungs-Rahmennummer CFN_min kleiner als 256 definiert, die ein Deaktivierungsintervall zwischen der minimalen Verbindungs-Rahmennummer CFN_min und 255 festlegt, ab der das Terminal nach Erreichen der Synchronisation auf das Downlink-Signal die Überrahmennummer HFN beim nächsten Überschlag der Verbindungs-Rahmennummer CFN nicht inkrementiert und das Uplink-Signal, auf das sich die Basisstation synchronisiert, erst nach diesem nächsten Überschlag sendet. Die minimale Verbindungs-Rahmennummer CFN_min kann in der Nachricht PCR dem Terminal individuell mitgeteilt werden oder als zellspezifischer Wert über den Broadcast- oder Verteilkanal allen Terminals zugänglich gemacht werden.

Bei der zweiten Maßnahme teilt das Terminal nach dem Zellwechsel die von ihm bestimmte Verbindungs-Rahmen-Nummer CFN mit. Nachdem das Terminal sich auf das physikalische Downlink-Signal synchronisiert hat und dann die Verbindungs-Rahmennummer CFN in der neuen Zelle nach obiger Formel ermittelt hat, sendet die RRC-Schicht des Terminals eine Nachricht PCRC (PHYSICAL CHANNEL RECONFIGURATION COMPLETE) an die Funknetzwerk-Steuerung, mit der das Terminal die Umkonfigurierung des physikalischen Kanals bestätigt und welches eine erste ermittelte Verbindungs-Rahmennummer CFN_first enthält. Für die weiter unten beschriebenen Regeln, nach denen die Überrahmennummer HFN inkrementiert wird oder nicht, ist es wichtig, dass die von der RRC-Schicht zu sendende Nachricht PCRC wenigstens einen Funkrahmen nach der Verbindungs-Rahmennummer CFN_first abgeschickt wind. Diese Nachricht kann schon auf dem dedizierten Kanal in der neuen Zelle verschickt werden, was dann aber voraussetzt, dass die Funknetzwerk-Steuerung sich schon auf das Uplink-Signal synchronisiert hat.

Im anderen Fall würde diese Nachricht über den RACH-Kanal in der neuen Zelle geschickt werden. Nach Erreichen der Synchronisation auf das physikalische Uplink-Signal ermittelt die Funknetzwerk-Steuerung ebenfalls die Verbindungs-Rahmennummer CFN für die neue Zelle. Da sowohl Terminal als auch die Funknetzwerk-Steuerung dieselbe System-Rahmennummer SFN für die Ermittlung der Verbindungs-Rahmennummer CFN verwenden, sind sie gleich. Es ist lediglich noch nicht klar, und zwar insbesondere, wenn die ermittelten Verbindungs-Rahmennummern CFN klein sind (z.B. 20, während 150 in diesem Sinne groß wäre), ob zwischen dem Absenden der Nachricht PCRC und dem endgültigen Empfang dieser Nachricht in der Funknetzwerk-Steuerung, ein Überschlag der neuen Verbindungs-Rahmennummer CFN stattgefunden hat. Diese Information wird dann aber in der mitgeschickten Verbindungs-Rahmennummer CFN_first mitgeteilt. Dabei müssen folgende Regeln gelten:

1. Sei CFN_current die Verbindungs-Rahmennummer in der RRC-Schicht der Funknetzwerk-Steuerung nach Empfang und Dekodierung der Nachricht PCRC. Die Funknetzwerk-Steuerung inkrementiert die Überrahmennummer HFN nach Empfang der Nachricht PCRC nicht, falls gilt:

$$CFN\_current - CFN\_first > 0$$

2. Die Funknetzwerk-Steuerung inkrementiert die Überrahmennummer HFN nach Empfang der Nachricht PCRC einmalig, falls gilt:

$$CFN\_current - CFN\_first \leq 0.$$

Die Inkrementierung im Falle CFN_current = CFN_first ist erforderlich, weil es - wie oben erwähnt - ausgeschlossen ist, dass die Nachricht PCRC innerhalb desselben Funkrahmens gesendet und empfangen wird, da die RRC-Schicht in dem Terminal mindestens einen Funkrahmen wartet, bis sie diese Nachricht nach ihrer Erzeugung absendet. Daher kann CFN_current = CFN_first nur bedeuten, dass die mit CFN_current bzw. CFN_first bezeichneten Funkrahmen um 256 Funkrahmen auseinanderliegen.

Die oben beschriebene Prozedur kann anhand der Fig. 5 näher erläutert werden. Bezugszeichen 20 gibt einen Zeitpunkt an, zu dem sich das Terminal TE auf das physikalische Downlink-Signal synchronisiert hat. Anschließend wird die erste Verbindungs-Rahmennummer CFN_first (z.B. CFN_first = 221) vom Terminal berechnet (Bezugszeichen 21) und dann mittels der Nachricht PCRC an die Funknetzwerk-Steuerung des Funkzugangsnetzes FZ übermittelt (Bezugszeichen 22 und 23). Nach Auswertung der Nachricht PCRC in der Funknetzwerk-Steuerung wird die aktuelle Verbindungs-Rahmennummer CFN_current (Bezugszeichen 24) berechnet, und CFN_first und CFN_current werden miteinander verglichen.

Diese Prozedur kann wie auch die Deaktivierungs-Prozedur im Falle des Wechsels des Zustands CELL_FACH zum Zustand CELL_DCH eingesetzt werden.

Da die Verbindungs-Rahmennummer CFN einen Zyklus von 256 hat, kann mit dieser Prozedur die Überrahmennummer HFN für ein Terminal und die Funknetzwerk-Steuerung nur dann synchronisiert gehalten werden, wenn zwischen der Bestimmung von CFN_first und CFN_current nicht mehr als 256 Funkrahmen vergangen sind. In der Regel wird das der Fall sein. Es ist jedoch denkbar, dass in sehr ungünstigen Fällen durch häufige Übertragungswiederholungen die Übertragung der Nachricht PCRC 256 Funkrahmen oder mehr braucht. Sollen diese Fälle abgedeckt werden, so muss anstelle der Verbindungs-Rahmennummer CFN bei der Bildung von CFN_current und CFN_first die verallgemeinerte Verbindungs-Rahmennummer CFN* verwendet werden, die aus der System-Rahmennummer SFN nicht durch Modulo-256-Bildung sondern durch Modulo-M-Bildung entsteht:

$$CFN* = ((SFN * 38400 - DOFF * 512) \; div \; 38400 \;) \; mod \; M,$$

wobei M = 256 * L, L = 2, 4, 8, 16 annehmen kann. Dann ergeben sich die folgenden Bedingungen:

CFN\*_current - CFN\*_first > 0:
Es hat kein Überschlag der Verbindungs-Rahmennummer CFN stattgefunden. Daher tritt keine Inkrementierung der Überrahmennummer HFN auf.
-256 < CFN\*_current - CFN\*_first ≤ 0:
Es hat genau ein Überschlag der Verbindungs-Rahmennummer CFN stattgefunden. Daher tritt eine Inkrementierung der Überrahmennummer HFN auf.
-512 <CFN\*_current - CFN\*_first ≤ -256:
Es haben genau zwei Überschläge der Verbindungs-Rahmennummer CFN stattgefunden. Daher treten zwei Inkrementierung der Überrahmennummer HFN auf.
Allgemein kann formuliert werden:
-256 k < CFN\*_current - CFN\*_first ≤ -256 (k-1), mit k=1, 2, ..., L:
Es haben genau k Überschläge der Verbindungs-Rahmennummer CFN stattgefunden,. Daher treten k Inkrementierungen der Überrahmennummer HFN auf.
Diese Gleichungen führen zu der korrekten Überrahmennummer HFN in der Funknetzwerk-Steuerung, wenn k ≤ L gilt, d.h., dass L so gewählt werden muss, dass die verallgemeinerte Verbindungs-Rahmennummer CFN\* maximal einen Überschlag haben kann.

**Patentansprüche**

1. Drahtloses Netzwerk mit einem Funkzugangsnetz und mehreren Terminals, die jeweils zur Verschlüsselung bestimmter zu übertragener Daten und zur gleichartigen Bildung eines Schlüssels in Abhängigkeit von einer ersten und zweiten Rahmennummer bei einer aufzubauenden oder umzukonfigurierenden Verbindung zwischen dem Funkzugangsnetz und einem Terminal vorgesehen sind,
wobei die erste Rahmennummer von der periodisch sich verändernden Nummer des für die Datenübertragung verwendeten Funkrahmens und der Wert der zweiten Rahmennummer von der ersten Rahmennummer abhängt und
wobei anhand des Wertes der ersten Rahmennummer das Terminal und/oder das Funkzugangsnetz zur Feststellung vorgesehen ist, ob im Funkzugangsnetz eine zeitliche Verzögerung der Bildung der zweiten Rahmennummer erfolgen muss.

2. Drahtloses Netzwerk nach Anspruch 1,
**dadurch gekennzeichnet,**
**dass** das Funkzugangsnetz zur Aussendung einer Nachricht mit der Mitteilung über einen Aktivierungszeitpunkt zur Bildung der zweiten Rahmennummer an das Terminal vorgesehen ist.

3. Drahtloses Netzwerk nach Anspruch 1,
**dadurch gekennzeichnet,**
**dass** das Terminal anhand des Wertes der ersten Rahmennummer zur Feststellung vorgesehen ist, ob dem Funkzugangsnetz zur Bildung der zweiten Rahmennummer eine Mitteilung gesendet werden darf.

4. Drahtloses Netzwerk nach Anspruch 1,
**dadurch gekennzeichnet,**
**dass** das Funkzugangsnetz zur Aussendung einer Nachricht mit der Mitteilung über einen Deaktivierungszeitraum für die zeitliche Verzögerung der Bildung der zweiten Rahmennummer an das Terminal vorgesehen ist.

5. Drahtloses Netzwerk mit einem Funkzugangsnetz und mehreren Terminals, die jeweils zur Verschlüsselung bestimmter zu übertragener Daten und zur gleichartigen Bildung eines Schlüssels in Abhängigkeit von einer ersten und zweiten Rahmennummer bei einer aufzubauenden oder umzukonfigurierenden Verbindung zwischen dem Funkzugangsnetzwerk und einem Terminal vorgesehen sind,
wobei die erste Rahmennummer von der periodisch sich verändernden Nummer des für die Datenübertragung verwendeten Funkrahmens und der Wert der zweiten Rahmennummer von der ersten Rahmennummer abhängt und
wobei das Terminal zur Übertragung einer ersten Rahmennummer an das Funkzugangsnetz und die Bildung der zweiten Rahmennummer in Abhängigkeit vom Wert der ersten Rahmennummer vorgesehen ist.

FIG. 1

FIG. 2

FIG. 3

FIG. 4

FIG. 5

Europäisches Patentamt

**EUROPÄISCHER RECHERCHENBERICHT**

Nummer der Anmeldung

EP 01 00 0618

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GB 2 236 458 A (ERICSSON TELEFON AB L M) 3. April 1991 (1991-04-03) * Seite 3, Zeile 18 - Seite 6, Zeile 15 * | 1-5 | H04Q7/38 |
| D,A | "Universal Mobile Telecommunications System (UMTS);RRC Protocol Specification" ETSI TS 125 331 V3.4.1, 1. September 2000 (2000-09-01), Seiten 131-132, XP002192655 * Absatz '8.5.17! * | 1-5 | |
| A | WO 98 09458 A (ERICSSON TELEFON AB L M) 5. März 1998 (1998-03-05) * Ansprüche * | 1-5 | |
| A | US 5 243 653 A (MALEK CHARLES J ET AL) 7. September 1993 (1993-09-07) * Spalte 3, Zeile 64 - Spalte 9, Zeile 49 * | 1-5 | |
| A | WO 92 02088 A (ERICSSON GE MOBILE COMMUNICAT) 6. Februar 1992 (1992-02-06) * Seite 20, Zeile 9 - Seite 26, Zeile 14 * | 1-5 | **RECHERCHIERTE SACHGEBIETE (Int.Cl.7)** H04Q |

Der vorliegende Recherchenbericht wurde für alle Patentansprüche erstellt

| Recherchenort | Abschlußdatum der Recherche | Prüfer |
|---|---|---|
| DEN HAAG | 13. März 2002 | Roberti, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 00 0618

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2002

| Im Recherchenbericht angeführtes Patentdokument | | Datum der Veröffentlichung | Mitglied(er) der Patentfamilie | | | Datum der Veröffentlichung |
|---|---|---|---|---|---|---|
| GB 2236458 | A | 03-04-1991 | SE | 464553 | B | 06-05-1991 |
| | | | AU | 625469 | B2 | 09-07-1992 |
| | | | AU | 6353590 | A | 18-04-1991 |
| | | | CA | 2039699 | A1 | 13-03-1991 |
| | | | CN | 1050294 | A ,B | 27-03-1991 |
| | | | DE | 4026698 | A1 | 14-03-1991 |
| | | | FR | 2652468 | A1 | 29-03-1991 |
| | | | HK | 58695 | A | 28-04-1995 |
| | | | JP | 2978243 | B2 | 15-11-1999 |
| | | | JP | 4501944 | T | 02-04-1992 |
| | | | KR | 9702747 | B1 | 10-03-1997 |
| | | | NZ | 234720 | A | 23-12-1992 |
| | | | SE | 8902994 | A | 13-03-1991 |
| | | | WO | 9104620 | A1 | 04-04-1991 |
| | | | US | 5293423 | A | 08-03-1994 |
| WO 9809458 | A | 05-03-1998 | US | 5778075 | A | 07-07-1998 |
| | | | AU | 3875797 | A | 19-03-1998 |
| | | | WO | 9809458 | A1 | 05-03-1998 |
| | | | SE | 9900589 | A | 07-05-1999 |
| US 5243653 | A | 07-09-1993 | AT | 195043 | T | 15-08-2000 |
| | | | CA | 2135913 | A1 | 09-12-1993 |
| | | | CN | 1082274 | A ,B | 16-02-1994 |
| | | | DE | 69329111 | D1 | 31-08-2000 |
| | | | DE | 69329111 | T2 | 22-03-2001 |
| | | | DK | 641505 | T3 | 27-11-2000 |
| | | | EP | 0641505 | A1 | 08-03-1995 |
| | | | ES | 2149816 | T3 | 16-11-2000 |
| | | | GR | 3034578 | T3 | 31-01-2001 |
| | | | MX | 9302947 | A1 | 31-05-1994 |
| | | | PT | 641505 | T | 30-11-2000 |
| | | | WO | 9325021 | A1 | 09-12-1993 |
| WO 9202088 | A | 06-02-1992 | US | 5081679 | A | 14-01-1992 |
| | | | AU | 648960 | B2 | 05-05-1994 |
| | | | AU | 8626791 | A | 18-02-1992 |
| | | | CA | 2087615 | A1 | 21-01-1992 |
| | | | CN | 1058499 | A ,B | 05-02-1992 |
| | | | GB | 2261349 | A ,B | 12-05-1993 |
| | | | HK | 29895 | A | 10-03-1995 |
| | | | JP | 2656155 | B2 | 24-09-1997 |
| | | | JP | 6501139 | T | 27-01-1994 |
| | | | KR | 123945 | B1 | 01-12-1997 |
| | | | MX | 9100127 | A1 | 28-02-1992 |
| | | | NZ | 238652 | A | 25-03-1994 |

EPO FORM P0461

ANHANG ZUM EUROPÄISCHEN RECHERCHENBERICHT
ÜBER DIE EUROPÄISCHE PATENTANMELDUNG NR.                    EP 01 00 0618

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2002

| Im Recherchenbericht angeführtes Patentdokument | Datum der Veröffentlichung | Mitglied(er) der Patentfamilie | Datum der Veröffentlichung |
|---|---|---|---|
| WO 9202088 A | | WO 9202088 A1 | 06-02-1992 |

Für nähere Einzelheiten zu diesem Anhang : siehe Amtsblatt des Europäischen Patentamts, Nr. 12/82